# EUROPEAN PATENT SPECIFICATION

(11) **EP 3 243 710 B1**
(45) Date of publication and mention of the grant of the patent: **24.04.2019**
(21) Application number: 16169194.4
(22) Date of filing: 11.05.2016
(51) Int. Cl.: B60R 21/38

(54) **BONNET DEPLOYMENT ARRANGEMENT**
MOTORHAUBENAUFSTELLANORDNUNG
SYSTÈME DE DÉPLOIEMENT DE CAPOT

(43) Date of publication of application: 15.11.2017
(73) Proprietor: Volvo Car Corporation, 40 531 Göteborg (SE)
(72) Inventor: Fernández Genao, Mónica, 41253 Göteborg (SE); Olpak, Tolga, SE-41264 Göteborg (SE); Fredriksson, Anders, 41457 Göteborg (SE); Tekin, Cihan, 41724 Göteborg (SE); Palovaara, Jan, 41513 Göteborg (SE)
(74) Representative: Kransell & Wennborg KB

(56) References cited:
- EP-A1- 2 239 169
- EP-A1- 2 902 272
- DE-A1-102013 003 956
- GB-A- 2 451 622

## Description

### TECHNICAL FIELD

The present disclosure relates to a bonnet deployment arrangement adapted to be located at an end portion of a bonnet of a vehicle. The disclosure further relates to a bonnet arrangement comprising such a bonnet deployment arrangement and to a method for transferring a bonnet deployment arrangement from a normal state to a deployed state.

### BACKGROUND

If a motor vehicle, such as a car, is involved in an accident in which the front part of the vehicle hits a vulnerable road user, such as a pedestrian or a cyclist, it is not uncommon that the head of the vulnerable road user impacts on the bonnet of the vehicle. The vulnerable road user may in that case be severely injured. One parameter, which can affect the severity of the injury, is the fact that the bonnet, which is usually formed from a thin metal sheet, would tend to bend, and then deform on hard engine parts, such as an engine block, located in an engine compartment beneath the bonnet. In order to reduce the severity of these accidents, it is well-known to use a deployable bonnet. By displacing the bonnet to a deployed position, also called a pop-up position, the distance between the bonnet and the hard engine parts is increased, and thereby the consequences of such an impact are mitigated.

Different kinds of hinge arrangements allowing deployment of at least the rear end portion of the bonnet are commonly known. Sometimes, there may also be a desire to be able to deploy the front end portion of the bonnet to a deployed position. This may facilitate that the bonnet as a whole can assume a deployed position.

Patent document DE 101 52 621 A1 discloses a bonnet arrangement including at least one rear hinge device attached to the bonnet and the bodywork. In a collision with a pedestrian, the bonnet is raised at the rear region. The front region of the bonnet is forcibly raised by a mechanical coupling when the rear region is raised. A rearward component of the motion is also possible. EP2902272 A1 discloses a bonnet deployment arrangement according to the preamble of claim 1.

The bonnet is in American English often known as a hood, but herein the British English term bonnet is used.

### SUMMARY

The object of the present disclosure is to overcome or ameliorate at least one of the disadvantages of the prior art, or to provide a useful alternative.

The object above may be achieved by the subject-matter of claim 1. Embodiments are set forth in the appended dependent claims, in the following description and in the drawings.

Thus, the present invention relates to a bonnet deployment arrangement adapted to be located at an end portion of a bonnet of a vehicle. The bonnet deployment arrangement is transferable from a normal state to a deployed state and comprises a first portion adapted to be attached, directly or indirectly, to the bonnet, a second portion comprising one of a striker or a latch for retaining the bonnet in a closed position, a pivot arm, and a locking unit, having a locked state and an unlocked state. The pivot arm is rotatably connected to the first portion at a first axis and rotatably connected to the second portion at a second axis. The first portion is locked relative to the second portion in the locked state of the locking unit. The first portion is movable in relation to the second portion by means of the pivot arm rotating at the first axis and at the second axis in the unlocked state of the locking unit, the bonnet deployment arrangement thereby being transferable from the normal state to the deployed state.

The bonnet deployment arrangement as described herein is typically located at a front end portion of the bonnet. Hence the bonnet deployment arrangement is able to displace the front end portion of the bonnet to the deployed position being at least upwards, preferably upwards and rearwards as compared to the closed position of the bonnet. Raising the front end portion of the bonnet, or both end portions, may be advantageous in case the vulnerable road user hits a front portion of the bonnet, e.g. if the vulnerable road user is short, such as a child.

There is further typically arranged at least one hinge arrangement at the rear end portion of the bonnet, e.g. two hinge arrangements placed at each lateral side of the bonnet, preferably the hinge arrangement being deployable, i.e. configured to be able to displace the rear end portion of the bonnet to a deployed position. Such hinge arrangements are commonly known in the art. The hinge arrangement may for example be of the kind disclosed in EP 2 977 273 A1. If a deployable hinge arrangement is used together with the bonnet deployment arrangement disclosed herein, the bonnet as a whole may be raised to reach a deployed position. The whole bonnet is then displaced, although the actual displacements, e.g. given in millimetres, at the front and rear end portions may differ. However, it would also be possible to use the bonnet deployment arrangement as disclosed herein with a non-deployable hinge arrangement.

The bonnet deployment arrangement as described herein may, as an alternative or a complement, be located at a rear end portion of the bonnet and hence operate on the rear end portion when deploying the bonnet. In that case, the hinge arrangement may be located at the front end portion.

A single bonnet deployment arrangement may be used. In that case, it is preferably located at or adjacent to a longitudinal centreline of the front end portion of the bonnet. As an alternative, there may be a bonnet deployment arrangement at or adjacent to each lateral side of the front end portion of the bonnet. There may also be additional bonnet deployment arrangements distributed along the front end portion. Thus, one, two, three or more bonnet deployment arrangements may be used.

Usually, there is one hinge arrangement at or adjacent to each lateral side of the rear end portion of the bonnet. However, one, two, three or more hinge arrangements may be used.

The normal state of the bonnet deployment arrangement is used during normal opening of the bonnet, i.e. during displacement of the bonnet to an open position, and when driving or parking the vehicle, i.e. the bonnet being in the closed position covering the engine compartment. The normal state of the bonnet deployment arrangement corresponds to the locked state of the locking unit. The locking unit is a fixed connection in the locked state.

The bonnet is retained in the closed position by means of striker and a latch in a way commonly known in the art. One pair of a striker and a latch may be used. In that case, the pair is preferably located at or adjacent to the centre of the front end portion of the bonnet. Often, there is one pair of a striker and a latch at or adjacent to each lateral side of the front end portion of the bonnet. One of the striker or the latch, often the striker, is comprised in the second portion of the bonnet deployment arrangement and the other of the striker or the latch is located at the body of the vehicle. In any case, the striker and the latch are located such that they can cooperate with each other in order to retain the bonnet in the closed position. The function of the latch and the striker is commonly known in the art and will not be further described herein. As an alternative, other known means to retain the bonnet in a closed position may be used. The striker may be configured to be movable in relation to the latch also when the latch is in a closed state and retains the striker, e.g. by the striker sliding in the latch.

The bonnet is displaceable between the closed position and the deployed position. In the deployed position, at least the end portion of the bonnet, at which the bonnet deployment arrangement is located, or preferably the whole bonnet, is situated at least upwards, preferably upwards and rearwards, as compared to the closed position. When a sensor of the vehicle has indicated a collision with a vulnerable road user or an imminent collision with a vulnerable road user, the bonnet may be displaced to the deployed position, thereby increasing the distance between the bonnet and the hard engine parts, and hence the consequences of such a collision are mitigated. There may be one or more possible deployed positions. Such sensors are common in the art and known to the skilled person.

The deployed state of the bonnet deployment arrangement corresponds to at least the end portion of the bonnet, at which the bonnet deployment arrangement is located, being in the deployed position or, preferably, the whole bonnet being in the deployed position. The locking unit is in the unlocked state, when transferring the bonnet deployment arrangement from the normal state to the deployed state.

The bonnet may be arranged such that the deployed position of the bonnet permits partial access to the engine compartment, e.g. for filling a vehicular liquid, such as a washer fluid or a coolant. Thereby there is no need to open the bonnet to a fully open position for such tasks.

The vehicle and the elements comprised in it, such as the bonnet, the hinge arrangement, and the bonnet deployment arrangement described herein, have a longitudinal direction, a transverse direction and a vertical direction. The directions, i.e. upwards, rearwards and forwards, as used herein are defined in relation to the vehicle assuming it is standing on a horizontal ground. Thus, the directionality of the bonnet deployment arrangement corresponds to the directionality of the vehicle.

The pivot arm may be located in an interspace inside the first and/or second portions when the bonnet deployment arrangement is in its normal state. The pivot arm may substantially extend in a plane being spanned by the vertical and longitudinal directions, i.e. being perpendicular to the transverse direction.

The first axis and second axis are spaced apart from each other by a distance d, which is determined as the shortest distance between the first axis and second axis. If the pivot arm is straight, the distance d will follow a centreline of the pivot arm or be substantially parallel to it. If the pivot arm has a curved shape, the distance as determined along a centreline of the pivot arm will be longer than the distance d. The distance d may be in the range of 0 < d ≤ 100 mm, preferably 0 < d ≤ 80 mm, more preferably 20 mm ≤ d ≤ 60 mm.

The front end portion of the bonnet may be adapted to be displaced rearwards by a longitudinal distance d_{xf} being in the range of 0 ≤ d_{xf} ≤ 150 mm, preferably 0 < d_{xf} ≤ 100 mm, more preferably 30 mm ≤ d_{xf} ≤ 80 mm, in relation to the body of the vehicle during the displacement from the closed position to the deployed position. Further, the front end portion may be adapted to be displaced upwards by a vertical distance d_{zf} being in the range of 0 < d_{zf} ≤ 100 mm, preferably 0 < d_{zf} ≤ 80 mm, more preferably 20 mm ≤ d_{zf} ≤ 60 mm in relation to the body of the vehicle during the displacement from the closed position to the deployed position. The distances d_{xf} and d_{zf} are determined at the central location of the bonnet deployment arrangement, e.g. at the first axis. Preferably, the front end portion moves upwards and rearwards simultaneously.

The rear end portion of the bonnet may be adapted to be displaced rearwards by a longitudinal distance dₓᵣ being in the range of 0 < dₓᵣ ≤ 200 mm, preferably 20 mm ≤ dₓᵣ ≤ 150 mm, more preferably 40 mm ≤ dₓᵣ ≤ 120 mm in relation to the body of the vehicle during the displacement from the closed position to the deployed position. Further, the rear end portion may be adapted to be displaced upwards by a vertical distance d_{zr} being in the range of 0 < d_{zr} ≤ 150 mm, preferably 30 mm ≤ d_{zr} ≤ 130 mm, more preferably 50 mm ≤ d_{zr} ≤ 110 mm in relation to the body of the vehicle during the displacement from the closed position to the deployed position. The distances dₓᵣ and d_{zr} are determined at the central location of the hinge arrangement. Preferably, the rear end portion moves upwards and rearwards simultaneously.

A first member of the locking unit may be moveably attached to one of the first portion and the second portion of the bonnet deployment arrangement. The first member is adapted to be displaced in order to transfer the locking unit from the locked state to the unlocked state. Preferably the first member is biased to keep the locking unit in the locked state, e.g. by a spring member. The first member may be displaced by rotation, e.g. rotating around an axis, and/or translation, e.g. sliding in a slot. The first member may comprise a hook shape, which may be adapted to grip around the other of the first portion and the second portion. Purely as an example, the first member may be rotatably attached to the first portion and comprise a hook shape being adapted to grip around the second portion, e.g. around a flange thereof.

The locking unit may further comprise a second member attached to the other of the first portion and the second portion, the second member being adapted to cooperate with the first member in the locked state of the locking unit. The second member may be fixedly or moveably attached to the other of the first portion and the second portion. The second member may comprise a hook shape, which may be adapted to grip around the first member. As an alternative, the first member may comprise a hook shape, which may be adapted to grip around the second member, or both the first and second members may comprise hook shapes.

The locking unit in the locked state connects the first portion to the second portion by a fixed connection such as a rivet, the fixed connection being releasable, deformable or breakable in order to transfer the locking unit from the locked state to the unlocked state. The fixed connection may be released, deformed or broken by the bonnet being displaced to the deployed position. Purely as an example, if a deployable hinge arrangement is used, the hinge arrangement is adapted to displace the bonnet at least upwards, preferably upwards and rearwards to the deployed position. Since the first portion is attached to the bonnet, it will be displaced as well. However, the second portion is held by the striker being in the latch. Hence, the fixed connection may eventually be released, deformed or broken, the bonnet deployment arrangement thereby transferring from the normal state to the deployed state.

Dependent on type of fixed connection and its location in the bonnet deployment arrangement, the fixed connection may be released, deformed or broken in the vertical and/or the longitudinal direction. The fixed connection may be located in a portion of the bonnet deployment arrangement directed towards a front end of the vehicle. As an alternative or a complement, the fixed connection may be located at a portion of the bonnet deployment arrangement being directed towards a windscreen of the vehicle.

Furthermore, it would also be possible to have both the above-mentioned locking unit comprising a moveable first member and the above-mentioned locking unit with the fixed connection in the same bonnet deployment arrangement.

The bonnet deployment arrangement may comprise a release unit, which is adapted to act on the locking unit in order to transfer it from the locked state to the unlocked state.

The release unit may comprise a release member, which is adapted to act on the locking unit in order to transfer it from the locked state to the unlocked state. The release member may be adapted to be fixedly attached to the first portion of the bonnet deployment arrangement or to a body of the vehicle, e.g. fixedly attached to the other of the striker or latch. Purely as an example, the striker may be comprised in the second portion and the release member may be fixedly attached to the latch. Purely as another example, the release member may be movably attached to the first portion, e.g. rotatably or slidably attached.

The release unit may comprise a release trigger means, e.g. a pyrotechnical device, adapted to act on the release member in order to transfer the locking unit from the locked state to the unlocked state. Such a release trigger means may act on a release member being movably attached to the first portion. Purely as an example, the release member may be pivotable and the release trigger means may push a first end of the release member upwards, such that a second end of the release member is pivoted downwards. By using a release trigger means, the bonnet deployment arrangement may be transferred to the deployed state independently of the movement at the hinge arrangement. The release trigger means may be used to displace the bonnet deployment arrangement to the deployed state by pushing on the first portion. As an alternative, or a complement, the hinge arrangement may help to displace also the bonnet deployment arrangement via the displacement of the deploying bonnet.

The bonnet itself may constitute at least a part of the release unit. For example, the displacement of the bonnet may release, deform or break the fixed connection. As an alternative example, the displacement of the bonnet may move the locking unit in relation to the release member.

The bonnet deployment arrangement may comprise a stopping unit, which is adapted to restrict the movement of the bonnet deployment arrangement, when it has reached the deployed state. Purely as an example, the stopping unit may restrict the movement of the pivot arm when it has reached a predetermined position of the deployed state of the bonnet deployment arrangement. The stopping unit may comprise a pin moving in a slot of the pivot arm reaching an end of the slot. As an alternative, the stopping unit may comprise a biased pin, which enters an opening in the pivot arm, when the pivot arm has reached the predetermined position.

The invention also relates to a bonnet arrangement for a vehicle. The bonnet arrangement comprises a bonnet being displaceable between a closed position and a deployed position located at least upwards, preferably upwards and rearwards, as compared to the closed position, and a bonnet deployment arrangement as disclosed herein, wherein the first portion of the bonnet deployment arrangement is attached, directly or indirectly, to an end portion of the bonnet, e.g. a front end portion. In the deployed position of the bonnet, at least the end portion of the bonnet, at which the bonnet deployment arrangement is located, or preferably the whole bonnet, is situated at least upwards, preferably upwards and rearwards, as compared to the closed position.

The bonnet arrangement may further comprise at least one hinge arrangement, which may be deployable or non-deployable.

The invention further relates to a vehicle comprising the bonnet deployment arrangement as disclosed herein or the bonnet arrangement as disclosed herein.

The invention as well relates to a method of transferring a bonnet deployment arrangement as disclosed herein from the normal state to the deployed state, the method comprising
- transferring the locking unit from the locked state to the unlocked state,
- displacing the first portion in relation to the second portion of the bonnet deployment arrangement of the by means of the pivot arm rotating at the first axis and at the second axis.

The locking unit may be transferred from the locked state to the unlocked state by the release unit adapted to act on the locking unit.

The release unit may comprise a release member, wherein the locking unit is transferred from the locked state to the unlocked state by the release member.

A release trigger means, e.g. a pyrotechnical device, may act on the release member in order to transfer the locking unit from the locked state to the unlocked state. The release trigger means may also be used to displace the bonnet deployment arrangement to the deployed state by pushing on the first portion.

### BRIEF DESCRIPTION OF THE DRAWINGS

The present invention will hereinafter be further explained by means of non-limiting examples with reference to the appended drawings wherein:
- Fig. 1: is a schematic side view of a bonnet arrangement according to the invention, showing a bonnet in a closed, an open and a deployed position, respectively.
- Figs. 2a-b: illustrate a bonnet deployment arrangement according to a first embodiment of the invention in a normal state.
- Fig. 2c: illustrates the bonnet deployment arrangement of Figure 2a during transfer to a deployed state.
- Fig. 2d: illustrates the bonnet deployment arrangement of Figure 2a in the deployed state.
- Figs. 3a-b: illustrate a bonnet deployment arrangement according to a second embodiment of the invention in a normal state.
- Fig. 3c: illustrates the bonnet deployment arrangement of Figure 3a in the deployed state.
- Figs. 4a-b: illustrate a bonnet deployment arrangement according to a third embodiment of the invention in a normal state.
- Fig. 4c: illustrates the bonnet deployment arrangement of Figure 4a during transfer to a deployed state.
- Fig. 4d: illustrates the bonnet deployment arrangement of Figure 4a in the deployed state.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, as defined by the appended claims. Details from two or more of the embodiments may be combined with each other.

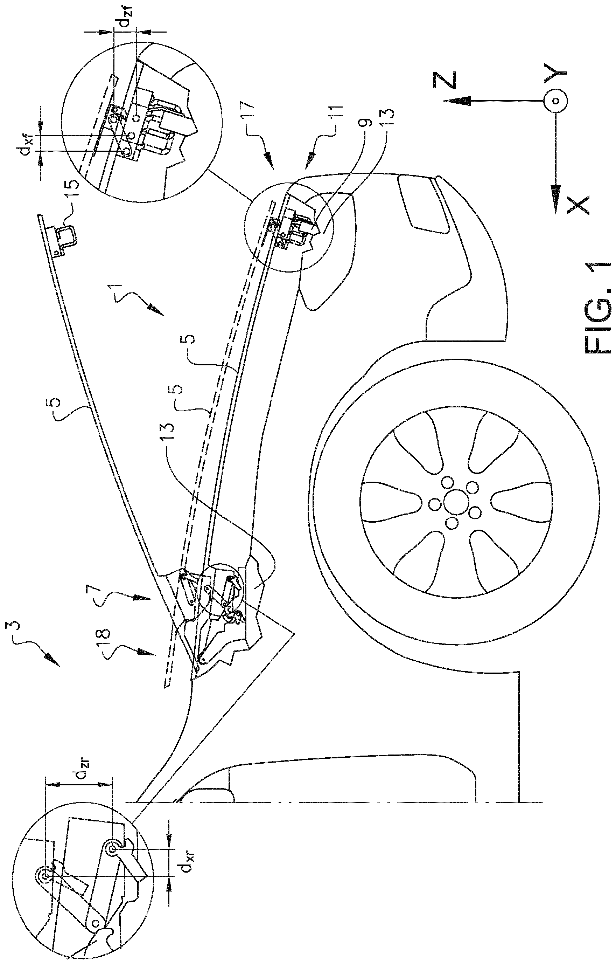

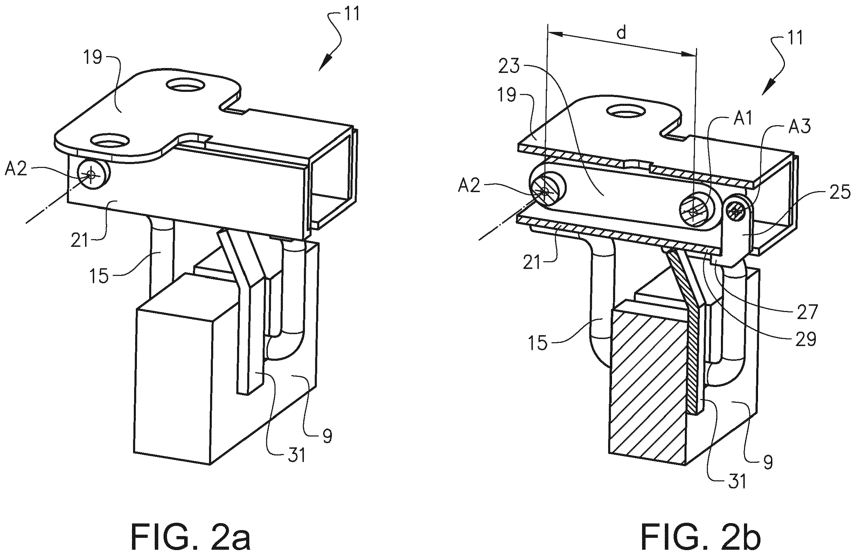

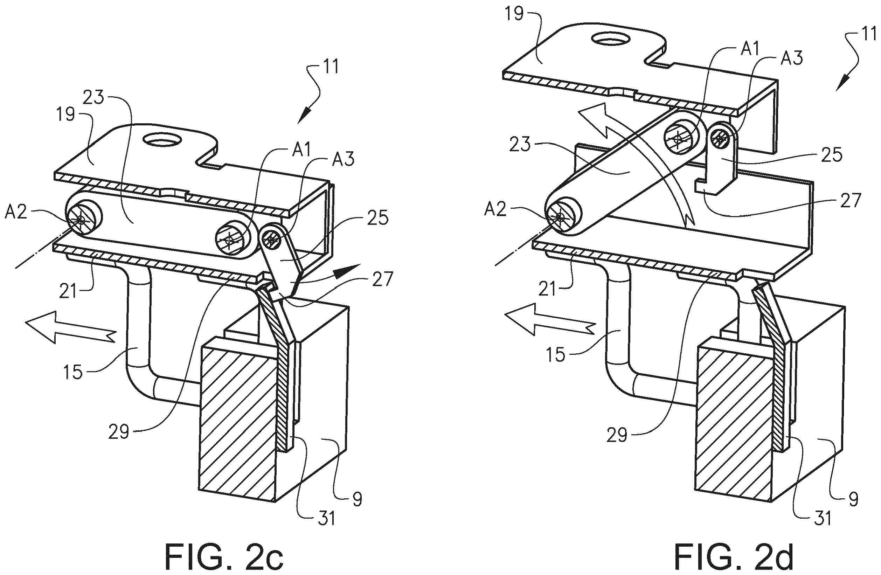

Figure 1 schematically illustrates a bonnet arrangement 1 of a vehicle 3 according to the invention. The illustrated vehicle 3 is a car. The bonnet arrangement 1 comprises a bonnet 5, a hinge arrangement 7, a latch 9 and a bonnet deployment arrangement 11. The bonnet 5 is connected to a body 13 of the vehicle 3 by a striker 15, comprised in the bonnet deployment arrangement 11, and the latch 9 at a front end portion 17 of the bonnet 5, and by the hinge arrangement 7 at a rear end portion 18 of the bonnet 5. Different embodiments of bonnet deployment arrangements according to the invention will be further described below in conjunction with Figures 2-4. The hinge arrangement 7 of Figure 1 is configured to allow the bonnet 5 to be displaced to a deployed position. Such hinge arrangements are commonly known in the art. The hinge arrangement 7 may for example be of the kind disclosed in EP 2 977 273 A1. However, it would also be possible to use the bonnet deployment arrangement as disclosed herein with a non-deployable hinge arrangement.

The bonnet 5 is shown in a closed position, see continuous line, in the deployed position, see dashed line, and in an open position, see dash-dotted line.

The closed position of the bonnet 5 is used during normal driving of the vehicle 3 and during parking of the vehicle 3.

The open position of the bonnet 5, as indicated by the dash-dotted line in Figure 1, permits access to the engine compartment, e.g. for service, maintenance or repair work. In order to reach the open position, the bonnet 5 is pivoted at or adjacent to its rear end portion 18 by means of the hinge arrangement 7. The latch 9 is in an open state such that striker 15 can be released from the latch 9 allowing the pivotal movement of the bonnet 5. The bonnet 5 is displaced directly from the closed position to the open position without passing the deployed position. When closing the bonnet 5 again from the open position, the opening displacement may be reversed. The latch 9 is then transferred to a closed state in which it retains the striker 15, thereby keeping the bonnet 5 in the closed position.

The bonnet 5 is also displaceable from the closed position to the deployed position. As already mentioned above in the background section, it is well-known to use a deployable bonnet in a vehicle raising at least the rear end portion 18 of the bonnet 5 to the deployed position, also called the pop-up position. The embodiment of the bonnet arrangement 1 illustrated in Figure 1 is adapted to also raise the front end portion 17 of the bonnet 5 in order to reach the deployed position. This may be advantageous if the vulnerable road user hits a front portion of the bonnet 5, which e.g. may be the case, if the vulnerable road user is short, e.g. a child. Hence, in the embodiment illustrated in Figure 1, the bonnet 5 is raised as a whole. The deployed position of bonnet 5 is at least upwards, preferably upwards and rearwards, in relation to the closed position.

The vehicle 3 and the elements comprised in it, such as the bonnet 5, the hinge arrangement 7 and the bonnet deployment arrangement 11, have a longitudinal direction x, a transverse direction y and a vertical direction z. The directions, i.e. upwards, rearwards and forwards, as used herein are defined in relation to the body 13 of the vehicle 5 assuming it is standing on a horizontal ground. Thus, the directionality of the bonnet deployment arrangement 11 corresponds to the directionality of the vehicle 3.

When the bonnet 5 of the illustrated embodiment is displaced from its closed position to its deployed position, it moves simultaneously upwards in the z-direction and rearwards in the x-direction. Both the front end portion 17 and the rear end portion 18 are displaced, such that the whole bonnet 5 is displaced to the deployed position, although the actual displacements, e.g. given in millimetres, at the front and rear end portions may differ. Preferably, the bonnet 5 is also displaceable from the deployed position back to the closed position, such that the bonnet arrangement 1 may be restored to the closed position after the deployed position has been activated.

The front end portion 17 of the bonnet 5 may be adapted to be displaced rearwards by a longitudinal distance d_{xf} being in the range of 0 ≤ d_{xf} ≤ 150 mm, preferably 0 < d_{xf} ≤ 100 mm, more preferably 30 mm ≤ d_{xf} ≤ 80 mm in relation to the body 13 of the vehicle 3 during the displacement from the closed position to the deployed position. Further, the front end portion 17 may be adapted to be displaced upwards by a vertical distance d_{zf} being in the range of 0 < d_{zf} ≤ 100 mm, preferably 0 < d_{zf} ≤ 80 mm, more preferably 20 mm ≤ d_{zf} ≤ 60 mm in relation to the body of the vehicle during the displacement from the closed position to the in relation to the body 13 of the vehicle 3 during the displacement from the closed position to the deployed position. The distances d_{xf} and d_{zf} are determined at the central location of the bonnet deployment arrangement 11.

The rear end portion 18 of the bonnet 5 may be adapted to be displaced rearwards by a longitudinal distance dₓᵣ being in the range of 0 < dₓᵣ ≤ 200 mm, preferably 20 mm ≤ dₓᵣ ≤ 150 mm, more preferably 40 mm ≤ dₓᵣ ≤ 120 mm in relation to the body 13 of the vehicle 3 during the displacement from the closed position to the deployed position. Further, the rear end portion 18 may be adapted to be displaced upwards by a vertical distance d_{zr} being in the range of 0 < d_{zr} ≤ 150 mm, preferably 30 mm ≤ d_{zr} ≤ 130 mm, more preferably 50 mm ≤ d_{zr} ≤ 110 mm in relation to the body 13 of the vehicle 3 during the displacement from the closed position to the deployed position. The distances dₓᵣ and d_{zr} are determined at a central location of the hinge arrangement 7.

In the embodiment of Figure 1, the striker 15 is comprised in the bonnet deployment arrangement 11, while the latch 9 is attached to the body 13 of the vehicle 3. As an alternative, not illustrated, the striker may be attached to the body 13 of the vehicle 3 and the latch 9 comprised in the bonnet deployment arrangement. In any case, the striker 15 and the latch 9 are located such that they can cooperate with each other in order to retain the bonnet 5 in the closed position. The function of the latch 9 and the striker 15 is commonly known in the art and will not be further described herein. As an alternative, other known means to retain the bonnet in a closed position may be used.

Figures 2a-d illustrate a bonnet deployment arrangement 11 according to a first embodiment of the invention. The bonnet deployment arrangement 11 is adapted for being located at the front end portion 17 of the bonnet 5, cf. Figure 1. The bonnet deployment arrangement 11 comprises the striker 15, which cooperates with the latch 9 in order to retain the bonnet 5 in the closed position. The latch 9 is directly or indirectly attached to the body 13 of the vehicle 3, as may be seen in Figure 1. The bonnet deployment arrangement 11 is transferable from a normal state, illustrated in Figures 2a and 2b, to a deployed state, illustrated in Figure 2d. Figure 2c illustrates the bonnet deployment arrangement 11 during the transfer. Figure 2a illustrates a perspective view, while Figures 2b-2d illustrate a cross-sectional view.

The bonnet deployment arrangement 11 comprises a first portion 19, a second portion 21, a pivot arm 23 and a locking unit 25. The first portion 19 is adapted to be attached, directly, as is illustrated, or indirectly, to the bonnet 5. The second portion 21 comprises the striker 15 for retaining the bonnet 5 in the closed position. The pivot arm 23 is rotatably connected to the first portion 19 at a first axis A1 and rotatably connected to the second portion 21 at a second axis A2. The first axis A1 and second axis A2 are spaced apart from each other by a distance d, which is determined as the shortest distance between the first axis A1 and second axis A2. The above-mentioned displacement distances d_{xf} and d_{zf} may be determined at the first axis A1.

The locking unit 25 has a locked state, illustrated in Figures 2a and 2b, and an unlocked state, illustrated in Figure 2d. Figure 2c illustrates the locking unit 25 during transfer from the locked state to the unlocked state. The locking unit 25 may be biased, e.g. by means of a spring member, to the locked state. The locking unit 25 comprises a hook-shaped member 27, which is rotatably connected to the first portion 19 at a third axis A3.

Figures 2a and 2b illustrate the bonnet deployment arrangement 11 in the normal state, which is used for normal opening of the bonnet 5 and when driving or parking the vehicle 3. The striker 15 cooperates with the latch 9, since the latch 9 is in a locked state, in order to retain the bonnet 5 in the closed position. The locking unit 25 assumes its locked state, in which it locks the first portion 19 relative to the second portion 21, such that they cannot move in relation to each other. The hook-shaped member 27 grips around a flange 29 of the second portion 21. The hook-shaped member 27 may be biased, e.g. by means of a spring member, to the gripping position. The pivot arm 23 is located in an interspace located inside the second portion 21. The pivot arm 23 substantially extends in an xz-plane, i.e. a plane being perpendicular to the y-axis.

When the bonnet is to be displaced to its open position e.g. for service or maintenance, cf. Figure 1, the bonnet 5 is pivoted at the hinge arrangement 7. In the open position, and during the opening displacement between the open and closed positions of the bonnet, the locking unit 25 maintains its locked state. The latch 9 is then in the open state such that the striker 15 can be released from the latch 9 allowing the pivotal movement of the bonnet 5.

If the bonnet 5 is to be displaced to its deployed position, cf. Figure 1, e.g. when a sensor of the vehicle 3 has indicated a collision with a vulnerable road user or an imminent collision with a vulnerable road user, the deployable hinge arrangement 7 displaces the rear end portion 18 of the bonnet to the deployed position, which in the illustrated case is upwards and rearwards of the closed position. Thereby also the front end portion 17 of the bonnet 5 is displaced in a corresponding way. The latch 9 is in the closed state and retains the striker 15 in the latch 9.

During a first phase of the deployment displacement, the striker 15 is pulled at least rearwards, e.g. rearwards and upwards, by sliding in the latch 9, until the hook-shaped member 27 meets a release member 31. The release member 31 is fixedly attached to the latch 9, as is illustrated in the embodiment of Figures 2a-2d, or to a component of the body 13 of the vehicle 3. Due to the further displacement of the deploying bonnet 5, the release member 31 will move the hook-shaped member 27 by rotation in the third axis A3, such that the hook-shaped member 27 no longer grips around the flange 29 of the second portion 21, thereby transferring the locking unit 25 to the unlocked state. See Figure 2c. In the illustrated first embodiment, the bonnet 5 with its movement during deployment and the release member 31 together constitute a release unit, which is used to transfer the locking unit 25 to the unlocked state.

Once the locking unit 25 is in the unlocked state, the first portion 19 can move in relation to the second portion 21 by means of the pivot arm 23 rotating at the first axis A1 and at the second axis A2, the bonnet deployment arrangement 11 thereby transferring from the normal state to the deployed state. This movement allows the front end portion 17 of the bonnet 5 to move at least upwards, preferably upwards and rearwards, to the deployed position, as is illustrated in Figure 2d, corresponding to the bonnet deployment arrangement 11 being in its deployed state.

The displacement of the bonnet deployment arrangement 11 thus comprises two phases. In the first phase, the striker 15 is pulled at least rearwards, preferably rearwards and upwards, by sliding in the closed latch 9, until the hook-shaped member 27 meets a release member 31. In a second phase, the locking unit 25 has been transferred to the unlocked state and the pivot arm 23 rotates at both the first and second axes A1, A2, lifting the first portion 19 of the bonnet deployment arrangement 11 above the second portion 21, preferably to a position upwards and rearwards as compared to when the bonnet deployment arrangement 11 is in its normal state.

The movement of the pivot arm 23 may be restricted by a stopping unit, not illustrated, when it has reached the predetermined position of the deployed state of the bonnet deployment arrangement 11. The stopping unit may comprise a pin moving in a slot of the pivot arm 23 reaching an end of the slot. As an alternative the stopping unit may comprise a biased pin, which enters an opening in the pivot arm 25, when the pivot arm 25 has reached the predetermined position.

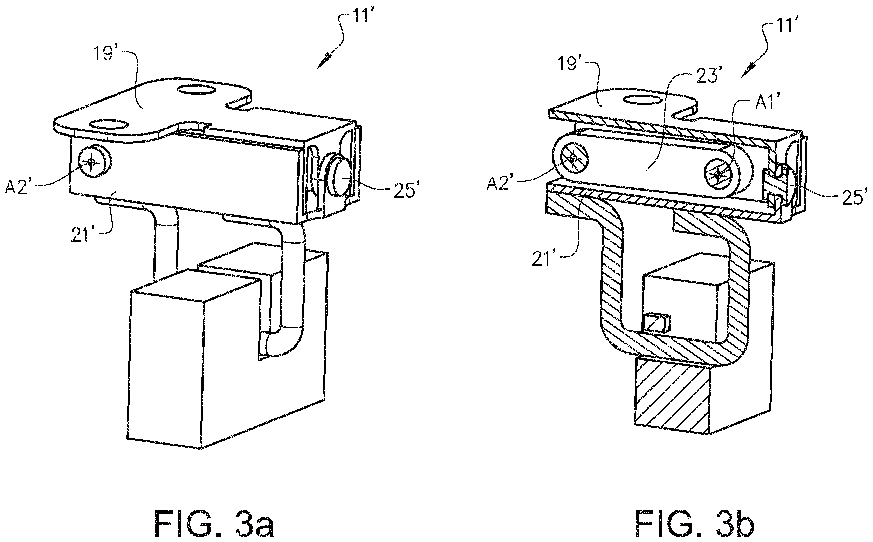

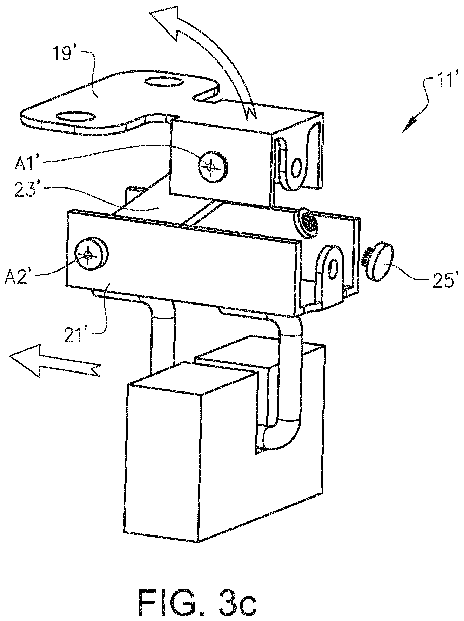

Figures 3a-3c schematically illustrate a bonnet deployment arrangement 11' according to a second embodiment of the invention in a normal state. The first portion 19', the second portion 21' and the pivot arm 23' are configured in a corresponding way as for the first embodiment illustrated in Figures 2a-2d. However, the locking unit 25' differs from that of the first embodiment. In the second embodiment, the locking unit 25' comprises a fixed connection, e.g. a rivet, which in the locked state of the locking unit 25' connects the first portion 19' and the second portion 21'. When the bonnet 5 is displaced during the deployment, e.g. by being the bonnet being moved by the deployable hinge arrangement 7, the fixed connection is released, deformed or broken, such that the locking unit 25' is transferred to the unlocked state, thereby allowing the first portion 19' to move in relation to the second portion 21' by means of the pivot arm 23' rotating at the first axis A1' and at the second axis A2', the bonnet deployment arrangement 11' thereby transferring from the normal state to the deployed state. This movement allows the front end portion 17 of the bonnet 5 to move at least upwards, preferably upwards and rearwards, to the deployed position, wherein the bonnet deployment arrangement 11' is in its deployed state, see Figure 3c. In the illustrated embodiment, the fixed connection is broken substantially in the vertical direction z. Dependent on type of fixed connection and its location in the bonnet deployment arrangement, the fixed connection may be released, deformed or broken in the vertical and/or the longitudinal direction. In the illustrated embodiment, the fixed connection is located in a portion of the bonnet deployment arrangement 11' directed towards a front end of the vehicle 3. As an alternative or a complement, the fixed connection may be located at a portion of the bonnet deployment arrangement 11' directed towards a windscreen of the vehicle 3.

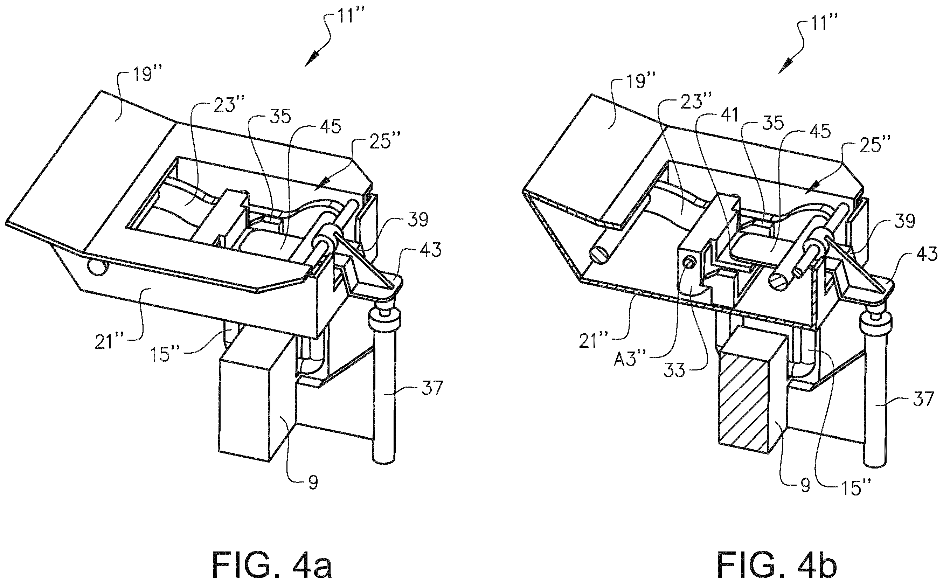

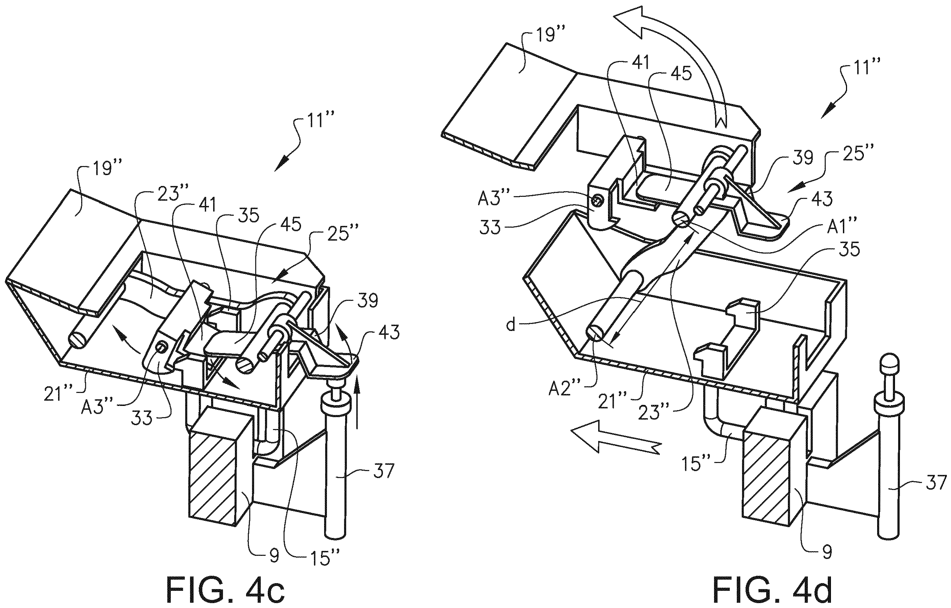

Figures 4a-4d illustrate a bonnet deployment arrangement 11" according to a third embodiment of the invention. Similar as for the first and second embodiments, the bonnet deployment arrangement 11" is transferable from a normal state, illustrated in Figures 4a and 4b, to a deployed state, illustrated in Figure 4d. Figure 4c illustrates the bonnet deployment arrangement 11 during the transfer. Figure 4a illustrates a perspective view, while Figures 4b-4d illustrate a cross-sectional view.

The bonnet deployment arrangement 11" comprises a first portion 19", a second portion 21", a pivot arm 23" and a locking unit 25". The second portion 21" comprises the striker 15" for retaining the bonnet 5 in the closed position. The pivot arm 23" is rotatably connected to the first portion 19" at a first axis A1" and rotatably connected to the second portion 21" at a second axis A2". The first axis A1 and second axis A2" are spaced apart from each other by a distance d, see Figure 4d. The pivot arm 23" has a curved shape, such that the distance as determined along a centreline of the pivot arm 23" is longer than the distance d, which is determined as the shortest distance between the first axis A1" and second axis A2". The curved shape of the pivot arm 23" makes it possible to house the pivot arm 23" inside the first portion 19" and second portion 21" when the bonnet deployment arrangement 11" is in the normal state as in Figure 4a and 4b, without the pivot arm 23" protruding upwards or downwards and yet having a small extension in the vertical direction.

The locking unit 25" has a locked state, illustrated in Figures 4a and 4b, and an unlocked state, illustrated in Figure 4d. The locking unit 25" comprises a first member 33, which is rotatably connected to the first portion 19" at a third axis A3". The locking unit 25" also comprises a second member 35, which is fixedly connected to the second portion 21". In the illustrated embodiment, the first member 33 comprises a hook shape, such that it can grip around the second member 35, which may also comprise a hook shape, as is illustrated. The first member 33 may be biased, e.g. by means of a spring member, to the gripping position.

Figure 4a and 4b illustrate the bonnet deployment arrangement 11" in the normal state. The striker 15" cooperates with the latch 9", since the latch 9" is in a closed state, in order to retain the bonnet 5 in the closed position. The locking unit 25" assumes its locked state, wherein it locks the first portion 19" relative to the second portion 21", such that they cannot move in relation to each other.

Opening of the bonnet 5 for service or maintenance is performed in a corresponding way as described above for the first embodiment.

If the bonnet deployment arrangement 11" is to be displaced to its deployed state, e.g. when a sensor of the vehicle has indicated a collision with a vulnerable road user or an imminent collision with a vulnerable road user, a release trigger means 37, e.g. a pyrotechnical device, may be activated. The release trigger means 37 acts on a release member 39, which in turn acts on a catch member 41 comprised in the locking unit 25". The release member 39 is pivotally attached to the first portion 19". The upwards-moving release trigger means 37 pushes a first end 43 of the release member 39 upwards. Thereby a second end 45 of the release trigger means 37 is moved downwards such that it is caught by the catch member 41, which is pushed downwards by the downwards-moving second end 45 of the release member 39. Since the catch member 41 is attached to the first member 33 of the locking unit 25", the first member 33 is thereby pivoted in the third axis A3, such that the first member 33 is moved to a non-gripping position in relation to the second member 35. Thereby the locking unit 25" is transferred to the unlocked state. See Figure 4c. In the illustrated third embodiment, the release trigger means 37 and the release member 39 are comprised in the release unit, which is used to transfer the locking unit 25 to the unlocked state.

Once the locking unit 25" is in the unlocked state, the first portion 19" can move in relation to the second portion 21" by means of the pivot arm 23" rotating at the first axis A1" and at the second axis A2", the bonnet deployment arrangement 11" thereby transferring from the normal state to the deployed state. The release trigger means 37 may thereby push on the first end 43 of the release member 39, and hence on the first portion 19", in order to displace the bonnet deployment arrangement 11" to the deployed state. Parallel to the deployment occurring at the front end portion 17 of the bonnet 5, the hinge arrangement 7 may displace the rear end portion 18 of the bonnet to the deployed position, which in the illustrated case is upwards and rearwards of the closed position. Hence the bonnet 5 as a whole is moved to the deployed position.

In the third embodiment, illustrated in Figures 4a-4d, the bonnet deployment arrangement 11" may be transferred to the deployed state independently of the movement at the hinge arrangement 7. As an alternative, or a complement, the hinge arrangement 7 may help to displace also the bonnet deployment arrangement 11" via the displacement of the bonnet 5.

Although it is preferred to use the bonnet deployment arrangement 11, 11', 11" in a bonnet arrangement 1 also comprising a deployable hinge arrangement 7, i.e. configured to allow the bonnet 5 to be displaced to a deployed position, it is also possible to use the bonnet deployment arrangement as disclosed herein with a non-deployable hinge arrangement.

Furthermore, not illustrated, it would also be possible to have both a locking unit 25, 25" of the first embodiment or third embodiment and a locking unit 25' of the second embodiment in the same bonnet deployment arrangement.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A bonnet deployment arrangement (11, 11', 11") adapted to be located at an end portion (17) of a bonnet (5) of a vehicle (3), said bonnet deployment arrangement (11, 11', 11") being transferable from a normal state to a deployed state,
said bonnet deployment arrangement (11, 11', 11") comprising
- a first portion (19, 19', 19") adapted to be attached, directly or indirectly, to said bonnet (5),
- a second portion (21, 21', 21") comprising one of a striker (15) or a latch for retaining said bonnet (5) in a closed position,
- a pivot arm (23, 23', 23"), and
- a locking unit (25, 25', 25") having a locked state and an unlocked state, said pivot arm (23, 23', 23") being rotatably connected to said first portion (19, 19', 19") at a first axis (A1, A1") and rotatably connected to said second portion (21, 21', 21") at a second axis (A2, A2"),
said first portion (19, 19', 19") being locked relative to said second portion (21, 21', 21") in said locked state of said locking unit (25, 25', 25"),
said first portion (19, 19', 19") being movable in relation to said second portion (21, 21', 21") by means of said pivot arm (23, 23', 23") rotating at said first axis (A1, A1") and at said second axis (A2, A2") in said unlocked state of said locking unit (25, 25', 25"), said bonnet deployment arrangement (11, 11', 11") thereby being transferable from said normal state to said deployed state, **characterized in that** said locking unit (25') in said locked state connects said first portion (19') to said second portion (21') by a fixed connection such as a rivet, said fixed connection being releasable, deformable or breakable.

2. The bonnet deployment arrangement (11, 11") according to claim 1, wherein a first member (27, 33) of said locking unit (25, 25") is moveably attached to one of said first portion (19, 19', 19") and said second portion (21, 21', 21") of said bonnet deployment arrangement (11, 11"), such that said first member (27, 33) is adapted to be displaced from a first position to a second position, preferably said first member (27, 33) being biased to keep said locking unit (25, 25") in said locked state.

3. The bonnet deployment arrangement (11") according to claim 2, wherein said locking unit (25") further comprises a second member (35) attached to the other of said first portion (19, 19', 19") and said second portion (21, 21', 21"), said second member (35) being adapted to cooperate with said first member (33) in said locked state of said locking unit (25").

4. The bonnet deployment arrangement (11, 11") according to claim 2 or 3, wherein said first (27, 33) and/or second member (35) comprises a hook shape.

5. The bonnet deployment arrangement (11, 11', 11") according to any one of the preceding claims further comprising a release unit, which is adapted to act on said locking unit (25, 25', 25").

6. The bonnet deployment arrangement (11, 11', 11") according to claim 5, wherein said release unit comprises a release member (31, 39), which is adapted to act on said locking unit (25, 25"), said release member (31, 39) being adapted to be fixedly attached to said first portion (19") of said bonnet deployment arrangement (11") or to a body (13) of said vehicle (3), e.g. fixedly attached to the other of said striker or latch (9).

7. The bonnet deployment arrangement (11") according to claim 6, wherein said release unit comprises a release trigger means (37), e.g. a pyrotechnical device, adapted to act on said release member (39).

8. The bonnet deployment arrangement (11, 11', 11") according to any one of claims 6-8, wherein said bonnet (5) constitutes at least a part of said release unit.

9. The bonnet deployment arrangement (11, 11', 11") according to any one of the preceding claims further comprising a stopping unit, which is adapted to restrict the movement of said bonnet deployment arrangement (11, 11', 11"), when it has reached said deployed state .

10. A bonnet arrangement (1) for a vehicle (3), said bonnet arrangement (1) comprising
- a bonnet (5) being displaceable between a closed position and a deployed position located at least upwards, preferably upwards and rearwards, as compared to said closed position, and
- a bonnet deployment arrangement (11, 11', 11") according to any one of the preceding claims,
said first portion (19, 19', 19") of said bonnet deployment arrangement (11, 11', 11") being attached, directly or indirectly, to an end portion (17) of said bonnet (5).

11. A method of transferring a bonnet deployment arrangement (11, 11', 11") according to any one of claims 1 to 9 from said normal state to said deployed state, said method comprising
- transferring said locking unit (25, 25', 25") from said locked state to said unlocked state,
- displacing said first portion (19, 19', 19") in relation to said second portion (21, 21', 21") of said bonnet deployment arrangement (11, 11', 11") by means of said pivot arm (23, 23', 23") rotating at said first axis (A1, A1") and at said second axis (A2, A2").

12. The method according to claim 11, wherein said locking unit (25, 25") is transferred from said locked state to said unlocked state by a release unit adapted to act on said locking unit (25, 25").

13. The method according to claim 12, wherein said release unit comprises a release member (31, 39), said locking unit (25, 25") being transferred from said locked state to said unlocked state by said release member (31, 39).

14. The method according to claim 13, wherein a release trigger means (37), e.g. a pyrotechnical device, acts on said release member (39) in order to transfer said locking unit (25") from said locked state to said unlocked state.

## Patentansprüche

1. Motorhaubenaufstellanordnung (11, 11', 11"), die für einen Einsatz an einem Endabschnitt (17) einer Haube (5) eines Fahrzeugs (3) ausgelegt ist, wobei die Motorhaubenaufstellanordnung (11, 11', 11") aus einem Normalzustand in einen aufgestellten Zustand transferiert werden kann, wobei die Motorhaubenaufstellanordnung (11, 11', 11") umfasst:
- einen ersten Abschnitt (19, 19', 19"), der ausgelegt ist, um direkt oder indirekt an der Haube (5) befestigt zu werden;
- einen zweiten Abschnitt (21, 21', 21"), der einen Schließbügel (15) oder eine Verriegelung zum Zurückhalten der Haube (5) in einer geschlossenen Position umfasst;
- einen Schwenkarm (23, 23', 23") und
- eine Verriegelungseinheit (25, 25', 25") mit einem verriegelten Zustand und einem unverriegelten Zustand, wobei der Schwenkarm (23, 23', 23") drehbar mit dem ersten Abschnitt (19, 19', 19") an einer ersten Achse (A1, A1") und drehbar mit dem zweiten Abschnitt (21, 21', 21") an einer zweiten Achse (A2, A2") verbunden ist,
wobei der erste Abschnitt (19, 19', 19") im Verhältnis zum zweiten Abschnitt (21, 21', 21") im verriegelten Zustand der Verriegelungseinheit (25, 25', 25") verriegelt ist,
wobei der erste Abschnitt (19, 19', 19") im Verhältnis zum zweiten Abschnitt (21, 21', 21") mittels des Schwenkarms (23, 23', 23") durch Drehung an der ersten Achse (A1, A1") und an der zweiten Achse (A2, A2") im unverriegelten Zustand der Verriegelungseinheit (25, 25', 25") bewegbar ist, wodurch die Motorhaubenaufstellanordnung (11, 11', 11") aus dem Normalzustand in den aufgestellten Zustand transferiert werden kann,
**dadurch gekennzeichnet, dass**
die Verriegelungseinheit (25') im verriegelten Zustand den ersten Abschnitt (19') mit dem zweiten Abschnitt (21') durch eine feste Verbindung, beispielsweise einen Niet, verbindet, wobei die feste Verbindung lösbar, verformbar oder trennbar ist.

2. Motorhaubenaufstellanordnung (11, 11") nach Anspruch 1, wobei ein erstes Element (27, 33) der Verriegelungseinheit (25, 25") bewegbar an einem des ersten Abschnitts (19, 19', 19") oder des zweiten Abschnitts (21, 21', 21") der Motorhaubenaufstellanordnung (11, 11") befestigt ist, und wobei das erste Element (27, 33) so ausgelegt ist, dass es aus einer ersten Position in eine zweite Position verschoben werden kann, vorzugsweise dadurch, dass das erste Element (27, 33) vorgespannt ist, um die Verriegelungseinheit (25, 25") im verriegelten Zustand zu halten.

3. Motorhaubenaufstellanordnung (11") nach Anspruch 2, wobei die Verriegelungseinheit (25") weiterhin ein zweites Element (35) umfasst, das am anderen des ersten Abschnitts (19, 19', 19") oder des zweiten Abschnitts (21, 21', 21") befestigt ist, wobei das zweite Element (35) ausgelegt ist, um mit dem ersten Element (33) im verriegelten Zustand der Verriegelungseinheit (25") zusammenzuwirken.

4. Motorhaubenaufstellanordnung (11, 11") nach Anspruch 2 oder 3, wobei das erste Element (27, 33) und/oder das zweite Element (35) eine Hakenform umfasst.

5. Motorhaubenaufstellanordnung (11, 11', 11") nach einem der vorstehend aufgeführten Ansprüche, die weiterhin eine Freigabeeinheit umfasst, die ausgelegt ist, um auf die Verriegelungseinheit (25, 25', 25") einzuwirken.

6. Motorhaubenaufstellanordnung (11, 11', 11") nach Anspruch 5, wobei die Freigabeeinheit ein Freigabeelement (31, 39) umfasst, das ausgelegt ist, um auf die Verriegelungseinheit (25, 25") einzuwirken, wobei das Freigabeelement (31, 39) ausgelegt ist, um fest am ersten Abschnitt (19") der Motorhaubenaufstellanordnung (11") oder an einem Körper (13) des Fahrzeugs (3), z.B. fest am anderen des Verriegelungsbügels oder der Verriegelung (9), befestigt zu werden.

7. Motorhaubenaufstellanordnung (11") nach Anspruch 6, wobei die Freigabeeinheit ein Freigabeauslösemittel (37), z.B. eine pyrotechnische Vorrichtung, umfasst, die ausgelegt ist, um auf das Freigabeelement (39) einzuwirken.

8. Motorhaubenaufstellanordnung (11, 11', 11") nach einem der Ansprüche 6 bis 8, wobei die Haube (5) mindestens einen Teil der Freigabeeinheit darstellt.

9. Motorhaubenaufstellanordnung (11, 11', 11") nach einem der vorstehend aufgeführten Ansprüche, die weiterhin eine Stoppeinheit umfasst, die ausgelegt ist, um die Bewegung der Motorhaubenaufstellanordnung (11, 11', 11") zu beschränken, wenn sie den aufgestellten Zustand erreicht hat.

10. Haubenanordnung (1) für ein Fahrzeug (3), wobei die Haubenanordnung (1) umfasst:
- eine Haube (5), die zwischen einer geschlossenen Position und einer aufgestellten Position, die sich, im Vergleich zur geschlossenen Position, mindestens oberhalb, vorzugsweise oberhalb und rückwärts davon befindet, verschiebbar ist, und
- eine Motorhaubenaufstellanordnung (11, 11', 11") nach einem der vorstehend aufgeführten Ansprüche, wobei der erste Abschnitt (19, 19', 19") der Motorhaubenaufstellanordnung (11, 11', 11") direkt oder indirekt an einem Endabschnitt (17) der Haube (5) befestigt ist.

11. Verfahren zum Transferieren einer Motorhaubenaufstellanordnung (11, 11', 11") nach einem der Ansprüche 1 bis 9 aus dem Normalzustand in den aufgestellten Zustand, wobei das Verfahren umfasst:
- Transferieren der Verriegelungseinheit (25, 25', 25") aus dem verriegelten Zustand in den unverriegelten Zustand,
- Verschieben des ersten Abschnitts (19, 19', 19") im Verhältnis zum zweiten Abschnitt (21, 21', 21") der Motorhaubenaufstellanordnung (11, 11', 11") mittels des Schwenkarms (23, 23', 23") durch Drehung an der ersten Achse (A1, A1") und an der zweiten Achse (A2, A2").

12. Verfahren nach Anspruch 11, wobei die Verriegelungseinheit (25, 25") aus dem verriegelten Zustand in den unverriegelten Zustand durch eine Freigabeeinheit transferiert wird, die ausgelegt ist, um auf die Verriegelungseinheit (25, 25") einzuwirken.

13. Verfahren nach Anspruch 12, wobei die Freigabeeinheit ein Freigabeelement (31, 39) umfasst, und wobei die Verriegelungseinheit (25, 25") aus dem verriegelten Zustand in den unverriegelten Zustand durch das Freigabeelement (31, 39) transferiert wird.

14. Verfahren nach Anspruch 13, wobei ein Freigabeauslösemittel (37), z.B. eine pyrotechnische Vorrichtung, auf das Freigabeelement (39) einwirkt, um die Verriegelungseinheit (25") aus dem verriegelten Zustand in den unverriegelten Zustand zu transferieren.

## Revendications

1. Système de déploiement de capot (11, 11', 11") apte à être localisé à une partie d'extrémité (17) d'un capot (5) d'un véhicule (3), ledit système de déploiement de capot (11, 11', 11") pouvant être transféré d'un état normal à un état déployé, ledit système de déploiement de capot (11, 11', 11") comprenant:
une première partie (19, 19', 19") apte à être attachée, directement ou indirectement, audit capot (5),
une seconde partie (21, 21', 21") comprenant un élément parmi un étrier (15) ou un verrou pour retenir ledit capot (5) dans une position fermée,
un bras pivotant (23, 23', 23"), et
une unité de verrouillage (25, 25', 25") présentant un état verrouillé et un état déverrouillé,
ledit bras pivotant (23, 23', 23") étant connecté de façon rotative à ladite première partie (19, 19', 19") à un premier axe (A1, A1") et étant connecté de façon rotative à ladite seconde partie (21, 21', 21") à un second axe (A2, A2"),
ladite première partie (19, 19', 19") étant verrouillée par rapport à ladite seconde partie (21, 21', 21") dans ledit état verrouillé de ladite unité de verrouillage (25, 25', 25"), et
ladite première partie (19, 19', 19") étant déplaçable par rapport à ladite seconde partie (21, 21', 21") au moyen dudit bras pivotant (23, 23', 23") tournant audit premier axe (A1, A1") et audit second axe (A2, A2") dans ledit état déverrouillé de ladite unité de verrouillage (25, 25', 25"), ledit système de déploiement de capot (1, 11', 11") pouvant de ce fait être transféré dudit état normal audit état déployé,
**caractérisé en ce que** ladite unité de verrouillage (25') dans ledit état verrouillé connecte ladite première partie (19') à ladite seconde partie (21') par une connexion fixe telle qu'un rivet, ladite connexion fixe pouvant être libérée, déformée ou rompue.

2. Système de déploiement de capot (11, 11") selon la revendication 1, dans lequel un premier élément (27, 33) de ladite unité de verrouillage (25, 25") est attaché de façon mobile à une de ladite première partie (19, 19', 19") et de ladite seconde partie (21, 21', 21") dudit système de déploiement de capot (11, 11"), de telle manière que ledit premier élément (27, 33) soit apte à être déplacé d'une première position à une seconde position, ledit premier élément (27, 33) étant de préférence poussé de façon à maintenir ladite unité de verrouillage (25, 25") dans ledit état verrouillé.

3. Système de déploiement de capot (11") selon la revendication 2, dans lequel ladite unité de verrouillage (25") comprend en outre un second élément (35) attaché à l'autre de ladite première partie (19, 19', 19") et de ladite seconde partie (21, 21', 21"), ledit second élément (35) étant apte à coopérer avec ledit premier élément (33) dans ledit état verrouillé de ladite unité de verrouillage (25").

4. Système de déploiement de capot (11, 11") selon une revendication 2 ou 3, dans lequel ledit premier (27, 33) et/ou second (35) élément comprend une forme de crochet.

5. Système de déploiement de capot (11, 11', 11") selon l'une quelconque des revendications précédentes, comprenant en outre une unité de libération, qui est apte à agir sur ladite unité de verrouillage (25, 25', 25") .

6. Système de déploiement de capot (11, 11', 11") selon la revendication 5, dans lequel ladite unité de libération comprend un élément de libération (31, 39), qui est apte à agir sur ladite unité de verrouillage (25, 25"), ledit élément de libération (31, 39) étant apte à être attaché de façon fixe à ladite première partie (19") dudit système de déploiement de capot (11") ou à une carrosserie (13) dudit véhicule (3), par exemple attaché de façon fixe à l'autre dudit étrier ou verrou (9).

7. Système de déploiement de capot (11") selon la revendication 6, dans lequel ladite unité de libération comprend un moyen de déclenchement de libération (37), par exemple un dispositif pyrotechnique, apte à agir sur ledit élément de libération (39).

8. Système de déploiement de capot (11, 11', 11") selon l'une quelconque des revendications 6 à 8, dans lequel ledit capot (5) constitue au moins une partie de ladite unité de libération.

9. Système de déploiement de capot (11, 11', 11") selon l'une quelconque des revendications précédentes, comprenant en outre une unité d'arrêt, qui est apte à limiter le mouvement dudit système de déploiement de capot (11, 11', 11"), lorsqu'il a atteint ledit état déployé.

10. Système de capot (1) pour un véhicule (3), ledit système de capot (1) comprenant:
un capot (5) qui est déplaçable entre une position fermée et une position déployée située au moins vers le haut, de préférence vers le haut et vers l'arrière, par rapport à ladite position fermée, et
un système de déploiement de capot (11, 11', 11") selon l'une quelconque des revendications précédentes, ladite première partie (19, 19', 19") dudit système de déploiement de capot (11, 11', 11") étant attachée, directement ou indirectement, à une partie d'extrémité (17) dudit capot (5).

11. Procédé pour transférer un système de déploiement de capot (11, 11', 11") selon l'une quelconque des revendications 1 à 9 dudit état normal audit état déployé, ledit procédé comprenant les étapes suivantes:
transférer ladite unité de verrouillage (25, 25', 25") dudit état verrouillé audit état déverrouillé, et
déplacer ladite première partie (19, 19', 19") par rapport à ladite seconde partie (21, 21', 21") dudit système de déploiement de capot (11, 11', 11") au moyen dudit bras pivotant (23, 23', 23") tournant audit premier axe (A1, A1") et audit second axe (A2, A2").

12. Procédé selon la revendication 11, dans lequel ladite unité de verrouillage (25, 25") est transférée dudit état verrouillé audit état déverrouillé par une unité de libération apte à agir sur ladite unité de verrouillage (25, 25").

13. Procédé selon la revendication 12, dans lequel ladite unité de libération comprend un élément de libération (31, 39), ladite unité de verrouillage (25, 25") étant transférée dudit état verrouillé audit état déverrouillé par ledit élément de libération (31, 39).

14. Procédé selon la revendication 13, dans lequel un moyen de déclenchement de libération (37), par exemple un dispositif pyrotechnique, agit sur ledit élément de libération (39) afin de transférer ladite unité de verrouillage (25") dudit état verrouillé audit état déverrouillé.
